# EUROPEAN PATENT APPLICATION

(11) **EP 4 086 793 A1**
(43) Date of publication of application: **09.11.2022**
(21) Application number: 20909704.7
(22) Date of filing: 31.12.2020
(51) Int. Cl.: G06F 21/53, G06F 21/57, H04W 12/30

(54) **SAFE USER INTERFACE DISTRIBUTION METHOD FOR HETEROGENEOUS MULTI-DEVICE INTERACTION**

(30) Priority: 31.12.2019 KR 20190180075
(71) Applicant: Korea Advanced Institute of Science and Technology, Daejeon 34141 (KR)
(72) Inventor: SHIN, In-Sik, Daejeon 34141 (KR); OH, Sang-Eun, Daejeon 34141 (KR); KIM, A-Hyeon, Daejeon 34141 (KR); LEE, Sun-Jae, Daejeon 34141 (KR)
(74) Representative: Dantz, Jan Henning
(86) International application number: PCT/KR2020/019494
(87) International publication number: WO 2021/137659

(57) **Abstract**

Provided is a method for distributing a user interface (Ul) for heterogeneous multi-device interaction, and more particularly, a method of distributing a UI between heterogeneous platforms, the method supporting distribution of UI units so that a flexible multi-device use environment, such as a live streaming application, is possible even between heterogeneous platforms. A provided mobile operating system security technology allows a flexible multi-device use environment, such as a live streaming application, between heterogeneous platforms by supporting the distribution of UI units and ensures secure multi-surface sharing by considering and preventing security risk elements in a multi-device environment.

## Description

### BACKGROUND

### 1. Field of the Invention

The present invention relates to a secure method of distributing a user interface (Ul) for heterogeneous multi-device interaction, and more particularly, to a method of distributing a UI between heterogeneous platforms, the method supporting distribution of UI units so that a flexible multi-device use environment, such as a live streaming application, is possible even between heterogeneous platforms.

### 2. Discussion of Related Art

For a current mobile environment in which various mobile operating systems (OSs) (e.g., Android, iOS, webOS, etc.) coexist, a method of distributing a multi-device user interface (Ul) to different platforms is proposed. The method is on the assumption that a host device and a guest device support different platforms. The background technology of the present invention includes a mirroring technology for copying an entire screen of a host device to a guest device and a paper on dividing a screen of a host device and distributing the divided screens to guest devices (heterogeneous multi-mobile computing). However, these technologies merely support an entire screen or division of a screen into N equal parts. Accordingly, the technologies only serve to move an existing single-device use environment to a somewhat larger screen and do not properly support flexible use of multiple devices.

### SUMMARY

The present invention is directed to providing a mobile operating system (OS) security technology that allows a flexible multi-device use environment, such as a live streaming application, even between heterogeneous platforms by supporting distribution of UI units and ensures secure multi-surface sharing by considering and preventing security risk elements in a multi-device environment.

According to an aspect of the present invention, there is provided a method implemented by a computer to distribute a UI to a second smart device (hereinafter, "guest device"), which uses a different platform (hereinafter, "guest platform") from a program (hereinafter, "host platform") serving as a platform of a first smart device (hereinafter, "host device"), through an operation of the host platform when a specific application of the host device is executed, the method including (a) receiving a selection of a UI to be transmitted to the guest device, (b) rendering the selected UI, and (c) transmitting pixel data of the rendered UI to the guest device.

The method may further include, before the operation (b), (b01) receiving screen resolution information of the guest device from the guest device, and the operation (b) may include performing rendering according to the received resolution information.

The method may further include, after the operation (c), (d1) receiving data input through the UI by a user and corresponding UI information from the guest device, (d2) finding a UI object according to the UI information and calling an input event handler of the UI object, (d3) rendering a UI update frame for a UI update made upon the call according to the resolution information, and (d4) transmitting the rendered UI update frame to the guest device.

The operation (d3) may include, when a UI update animation is generated during the UI update, rendering each frame of the UI update animation according to the resolution information, and the operation (d4) may include transmitting each frame of the rendered UI update animation to the guest device.

The method may include, when each frame of the UI update animation is rendered and a currently rendered frame is similar to a previously transmitted frame, transmitting only a hash key value rather than frame data.

According to another aspect of the present invention, there is provided a method implemented by a computer to receive a UI from a first smart device (hereinafter, "host device") and execute the UI in a second smart device (hereinafter, "guest device") through an operation of a program (hereinafter, "guest platform") which serves as a platform of the guest device when a specific application of the host device is executed, the method including (a) receiving pixel data of a rendered UI from the host device and (b) rendering the received UI pixel data as an image. The guest platform is of a different type from a platform of the host device.

The method may further include, before the operation (a), (a01) transmitting screen resolution information of the guest device to the host device, and the UI pixel data received in the operation (a) may be data rendered according to the resolution information.

The method may further include, after the operation (b), (c1) receiving a data input of a user through the UI which is distributed and received from the host device, (c2) determining which UI object the input is for, (c3) transmitting the user input data and information on the UI object to the host device, (c4) receiving a UI update frame from the host device, and (c5) rendering the received UI update frame as an image.

The operation (c4) may include, when the UI update frame is a frame of a UI update animation, rendering each frame of the UI update animation as an image.

The method may include, when the frame of the UI update animation is received as a hash key value, loading and rendering a frame corresponding to the received hash key value among previously stored frames.

According to another aspect of the present invention, there is provided a first smart device (hereinafter, "host device") which performs a function of distributing a UI to a second smart device (hereinafter, "guest device") when a specific application is executed, the host device including at least one processor and at least one memory configured to store computer-executable instructions. The computer-executable instructions stored in the at least one memory involve the at least one processor (a) receiving a selection of a UI to be transmitted to the guest device, (b) rendering the selected UI, and (c) transmitting pixel data of the rendered UI to the guest device. The host device uses a different type of platform from the guest device.

According to another aspect of the present invention, there is provided a second smart device (hereinafter, "guest device") which receives a UI from a first smart device (hereinafter, "host device") and executes the UI when a specific application of the host device is executed, the guest device including at least one processor and at least one memory configured to store computer-executable instructions. The computer-executable instructions stored in the at least one memory involve the at least one processor (a) receiving pixel data of a rendered UI from the host device and (b) rendering the received UI pixel data as an image. The guest device uses a different type of platform from the host device.

According to another aspect of the present invention, there is provided a computer program (hereinafter, "host platform") stored in a non-transitory storage medium and running on a first smart device (hereinafter, "host device") to distribute a UI to a second smart device (hereinafter, "guest device") when a specific application of the host device is executed, the computer program including instructions stored in the non-transitory storage medium and involving a processor (a) receiving a selection of a UI to be transmitted to the guest device, (b) rendering the selected UI, and (c) transmitting pixel data of the rendered UI to the guest device. The host platform is of a different type from a platform of the guest device.

According to another aspect of the present invention, there is provided a computer program (hereinafter, "guest platform") stored in a non-transitory storage medium and running on a second smart device (hereinafter, "guest device") to receive a UI from a first smart device (hereinafter, "host device") and execute the UI in the guest device when a specific application of the host device is executed, the computer program including instructions stored in the non-transitory storage medium and involving a processor (a) receiving pixel data of a rendered UI from the host device and (b) rendering the received UI pixel data as an image. The guest platform is of a different type from a platform of the host device.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a diagram showing an exemplary embodiment of a screen in which content (an activity and a user interface (UI)) of a single application is distributed to multiple surfaces of a single device and the distributed content is flexibly used in the single device;
FIG. 2 is a schematic diagram illustrating multi-surface distribution of activity units and multi-surface distribution of UI units;
FIG. 3 is a flowchart illustrating multi-surface distribution of UI units;
FIG. 4 is a flowchart illustrating multi-surface distribution of activity units;
FIG. 5 is a schematic diagram illustrating multi-device UI distribution between different platforms;
FIG. 6 is a sequence diagram of multi-device UI distribution between different platforms;
FIG. 7 is a sequence diagram of interaction performed through a UI;
FIG. 8 is a schematic diagram of a trust computing technique for secure activity/UI distribution; and
FIG. 9 is a schematic diagram illustrating a user domain isolation technique for user-specific file access control.

### DETAILED DESCRIPTION

Hereinafter, exemplary embodiments of the present invention will be described in detail with reference to the accompanying drawings. Prior to this, terms or words used in the present specification and claims should not be construed as being limited to general or dictionary meanings and should be interpreted with meanings and concepts consistent with the technical spirit of the present invention on the basis of the principle that the inventor can appropriately define the concept of a term to best describe his or her invention. Therefore, the embodiments described herein and configurations shown in the drawings are merely most preferable embodiments of the present invention and do not represent all the technical spirit of the present invention. Accordingly, it should be understood that various equivalents and modifications may replace the embodiments at the time of filing the present application.

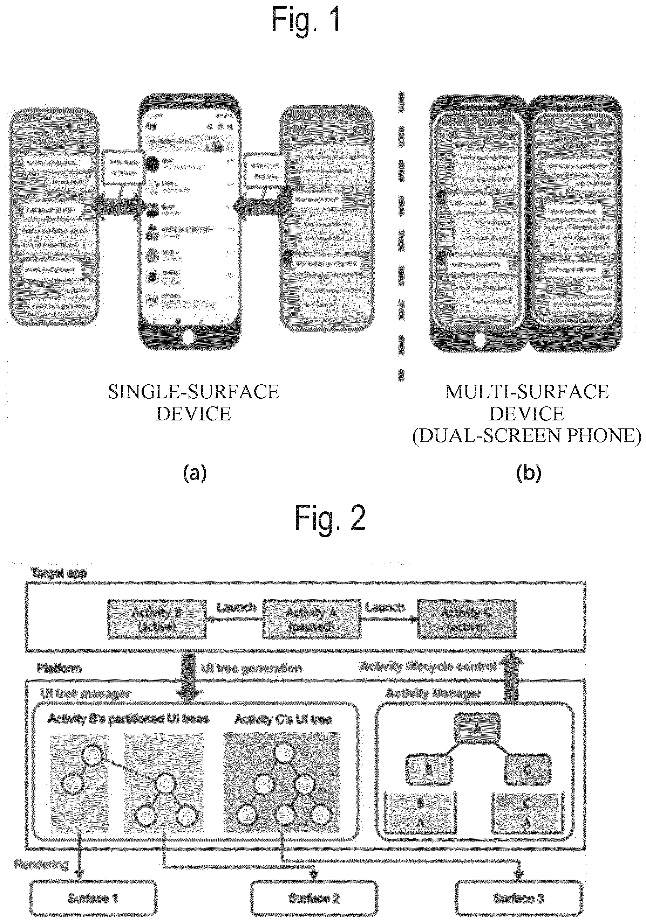

FIG. 1 is a diagram showing an exemplary embodiment of a screen in which content (an activity and a user interface (UI)) of a single application is distributed to multiple surfaces of a single device and the distributed content is flexibly used in the single device.

FIG. 1A shows a case of an existing single surface device, and FIG. 1B is an exemplary embodiment of a screen in which content (an activity and a UI) of a single application is distributed to multiple surfaces of a single device and the distributed content is flexibly used in the single device.

FIG. 2 is a schematic diagram illustrating multi-surface distribution of activity units and multi-surface distribution of UI units.

### - New activity management technique for multi-surface distribution of UI units

On a representative mobile operating system (OS), such as Android, a mobile application includes a set of several components. Here, the largest unit of mobile application components shown to a user is referred to as "activity," and each activity includes UI elements that may interact with the user and functions corresponding thereto. In general, an application developer configures an activity for each function of a mobile application and provides content while switching the screen of the mobile application by switching between activities. Currently, an activity manager of a mobile OS manages interaction between activities through a single stack structure and outputs only the uppermost activity of a stack on a screen. This is suited to an existing single surface environment in which only one screen is displayed at a time, but there is a serious limitation in that it is not possible to simultaneously show two or more screens in a multi-surface environment. According to the present invention, an individual activity stack is provided for each surface by expanding an activity manager. Each stack is configured in a tree structure for interaction between surfaces to track and manage interaction between activities, and a current activity of a mobile application can be freely used on multiple surfaces.

### - UI tree management technology for multi-surface distribution of UI units

A UI is the smallest unit of application components. A UI constitutes a screen of each activity and interacts with the user. A UI is configured in a tree structure in an activity to render each screen. A proposed mobile OS supports distributing and using individual UI elements on different surfaces, and for this, it is necessary to configure and manage the UI elements distributed to different surfaces as separate trees. A UI tree manager is newly proposed to overcome the limitation of an existing single tree structure and appropriately use each surface by managing UI elements distributed to several surfaces as individual trees. However, when UI elements are managed as individual trees, it is not possible to interact with the user or share lifecycle, and thus virtualization (the broken line) to an existing tree is provided to an application as shown in the drawing.

### - Provision of programming model and API for multi-surface support

A programming model and application programming interface (API) are provided not only to flexibly distribute and use existing mobile applications that are currently available on multiple surfaces according to a user's necessity, but also to support an application developer to design a new application in consideration of a multi-surface environment. To this end, a simple annotation is added to a layout/manifest file for determining an application design to support an activity, UI arrangement, etc. in multiple surfaces, and an API related to multi-surface utilization is provided to allow dynamic utilization of multiple surfaces. Also, various layout arrangements are possible by simply changing a layout/manifest file. Accordingly, third-party developers or users may share various multi-surface utilization cases, thereby promoting the proliferation of a multi-surface paradigm.

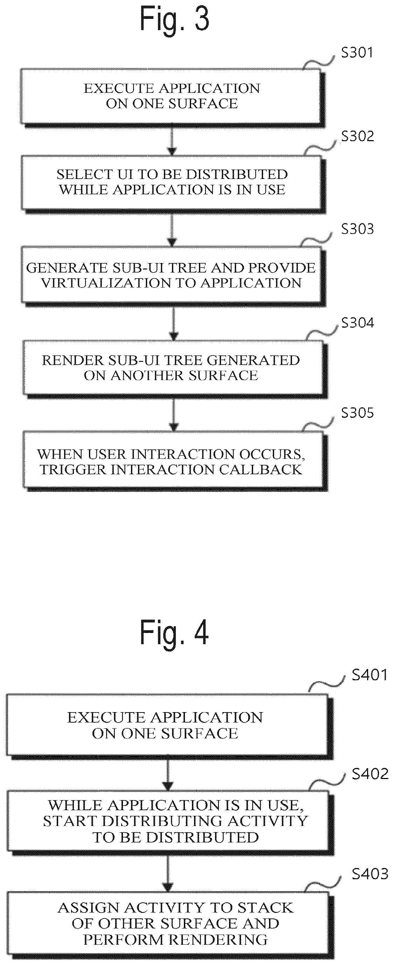

### FIG. 3 is a flowchart illustrating multi-surface distribution of UI units.

An application is executed on one surface (S301), and a UI to be distributed while the application is in use is selected (S302). A sub-UI tree including the UI to be distributed is generated, and virtualization, such as an existing UI tree, is provided to the application (S303). The generated sub-UI tree is rendered on another surface (S304). When a user interaction occurs, the virtualized existing UI tree is traversed, and interaction callback is triggered (S305).

FIG. 4 is a flowchart illustrating multi-surface distribution of activity units.

An application is executed on one surface (S401). A button for executing an activity to be distributed while the application is in use is specified, and when the button is clicked, activity distribution is started (S402). The activity is assigned to a stack of another surface, and rendering is performed (S403).

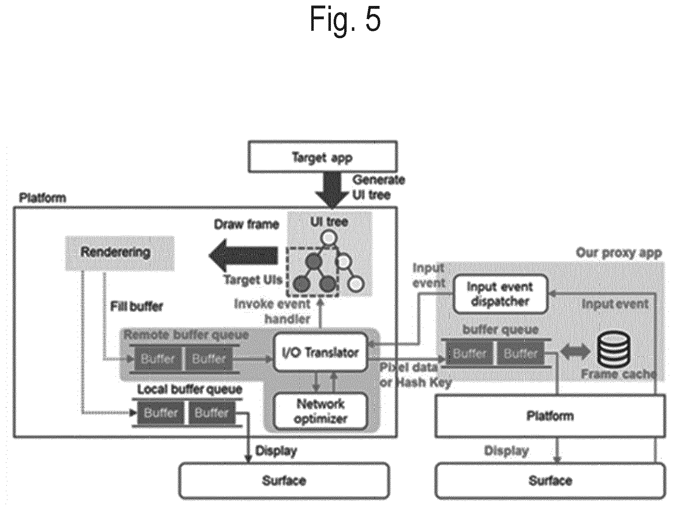

FIG. 5 is a schematic diagram illustrating multi-device UI distribution between different platforms.

A multi-device UI distribution method between different platforms is proposed according to the current mobile environment in which various mobile OSs (e.g., Android, iOS, webOS, etc.) coexist. The method is on the assumption that a host device and a guest device support different platforms. The background technology of the present invention includes a mirroring technology for copying an entire screen of a host device to a guest device and a paper on dividing a screen of a host device and distributing the divided screens to guest devices (heterogeneous multi-mobile computing). However, these technologies merely support an entire screen or division of a screen into N equal parts. Accordingly, the technologies only serve to move an existing single-device use environment to a somewhat larger screen and do not properly support flexible use of multiple devices.

On the other hand, the present invention supports distribution of UI units, thereby providing a technology for UI distribution between heterogeneous platforms so that a flexible multi-device use environment, such as a live streaming application, is possible even between heterogeneous platforms.

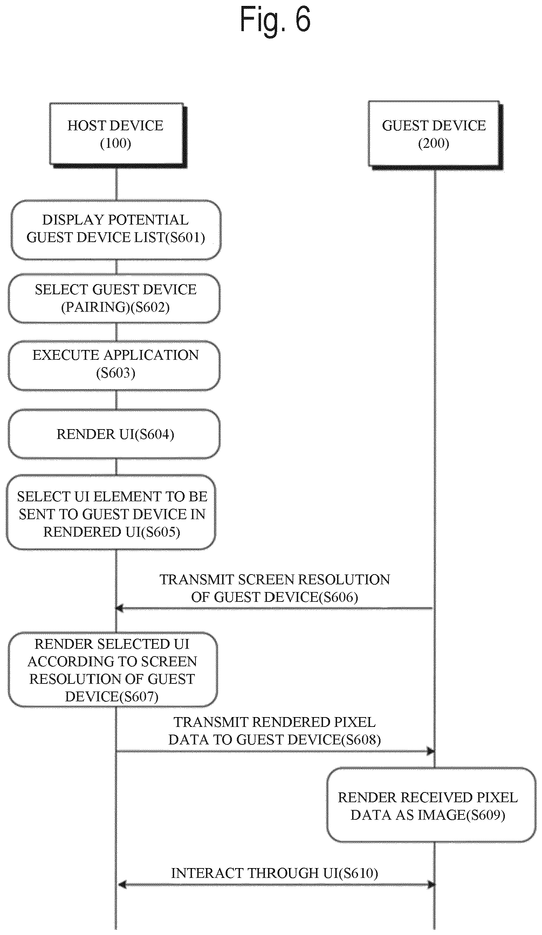

FIG. 6 is a sequence diagram of multi-device UI distribution between different platforms.

UI distribution between heterogeneous platforms is basically performed through distribution of UI pixel data. In other words, a host device is in charge of all rendering, and a guest device is only responsible for displaying rendered pixel data on the screen. In this case, the UI to be distributed is rendered according to the resolution of the guest device in consideration of a resolution difference between the devices. Pixel data to be transmitted is stored in a remote buffer queue, and pixel data of the UI remaining in the host device is stored in a local buffer queue. A graphics buffer in the remote buffer queue is transmitted to the guest device in real time. A proxy application that displays the received UI on the screen in the guest device renders the received pixel data as an image and displays the image to a user.

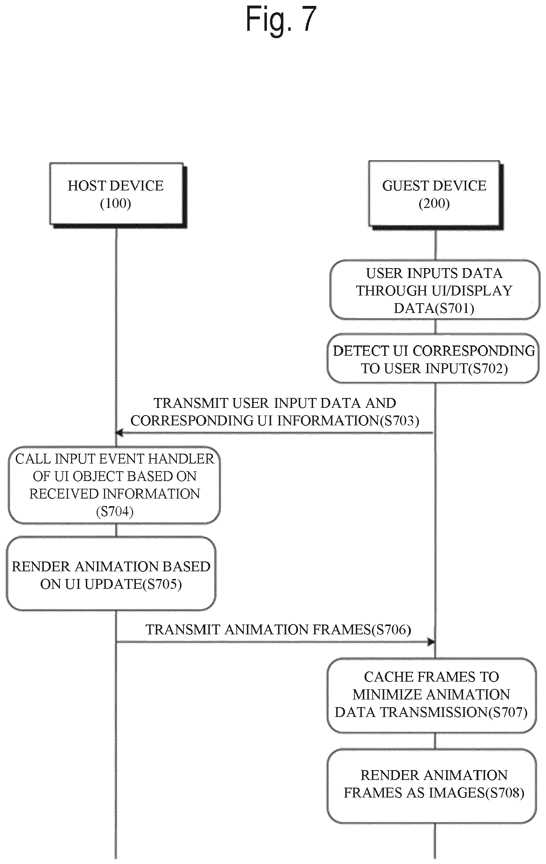

FIG. 7 is a sequence diagram of interaction performed through a UI.

According to interaction through a UI, when a user makes an input to a distributed UI through a guest device, the guest device determines which UI object the input is for and transmits the input data and information on the UI object to a host device. The host device finds the UI object on the basis of the information and calls an InputEvent handler of the UI object. A UI update animation generated at this time is rendered through the same process as UI distribution according to the resolution of the guest device, and each frame of the animation is transmitted to the guest device. To minimize data transmission, in the process of rendering the animation, each frame is cached in a hash structure. When a currently rendered frame is similar to a previously transmitted frame, only a hash key value rather than frame data is transmitted, and the guest device loads and displays a frame corresponding to the received hash key value among previously stored frames. This is referred to as "frame caching."

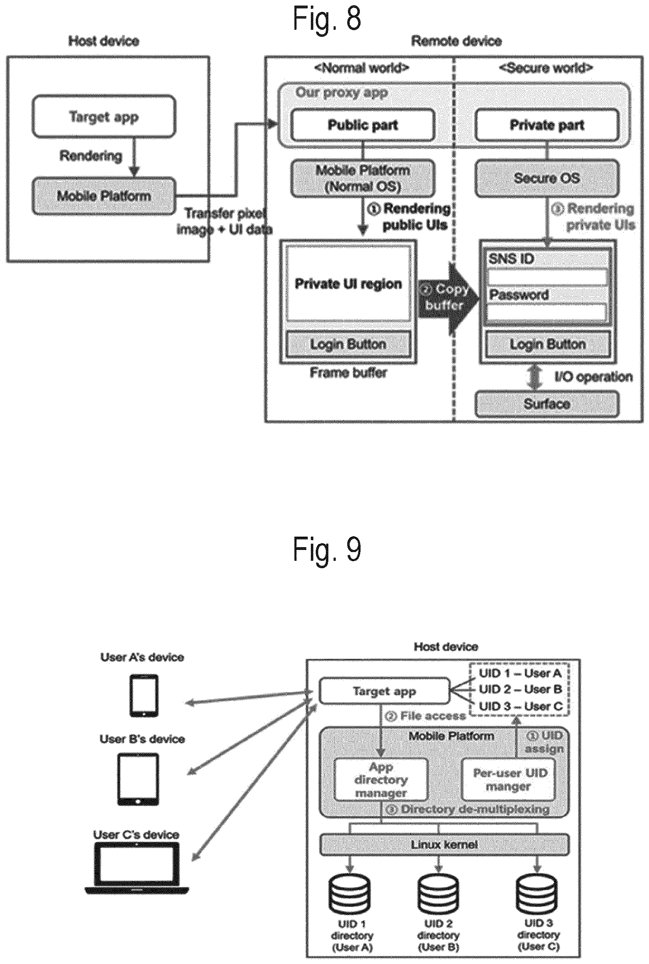

FIG. 8 is a schematic diagram of a trust computing technique for secure activity/UI distribution.

Users may use a device for common use, such as a smart television, in the process of sharing multiple surfaces of several devices. Such a device for common use may be accessed by a plurality of unspecified users, and thus applications or a mobile OS running on the device for common use is not ensured to be reliable at all times. For this reason, personal information of users may leak due to a device for common use in the following two general cases. In the first case, a device for common use displays a distributed activity/UI. For example, a user may shift a photo-related window of a social network service (SNS) application to a smart television to view an SNS photo together with his or her friends. In this case, when an OS of the smart television is malicious, personal photos may easily leak to the outside of the television without the user's recognition. In the second case, an application of a device for common use is used by another device of a user through activity/UI distribution. For example, users may use an SNS application of a smart television. The users may bring a login window to their smartphones to input login information securely and conveniently. When the SNS application stores login information of a previous user in a file system, another user may maliciously use the login information through the same SNS application. Research is underway on a mobile OS security technology that ensures secure multi-surface sharing by considering and preventing such security risk elements in a multi-device environment. To this end, the following security techniques are being researched.

FIG. 8 illustrates a trusted computing technique for secure activity/UI distribution. To protect an activity/UI distributed to a device for common use from a malicious OS, it is necessary to ensure a secure input/output process for the activity/UI. To this end, a practical solution is researched herein using ARM TrustZone which is a representative trusted execution environment. ARM TrustZone is a hardware security technique for providing a secure world isolated from the normal world to prevent even an OS with root authority from accessing data of a program executed in the secure world. Here, an important design issue is that a trusted computing base (TCB) included in the secure world is maintained in as small a size as possible because verification of the TCB needs to be easy. However, related research includes all code stacks and device drivers for all UI rendering in the secure world. Accordingly, TCB size increases, and in practice, it is impossible to verify the TCB. The present research staff proposes a design for ensuring secure input/output of an activity/UI while minimizing TCB size. The key idea of this technique is detecting a UI related to user information in data transmitted for activity/UI distribution, separately rendering the UI only in a secure world, and allowing a user input for the UI only in the secure world. To this end, a proxy application for rendering a distributed activity/UI is divided into a private part for handling user-related data and a public part for handling other data as shown in FIG. 8, and the private part and public part are executed in a secure world and the normal world, respectively. Accordingly, TCB size is minimized. Further, the present research staff plans to mitigate performance degradation due to switching overhead by minimizing the number of times that switching between worlds is performed.

FIG. 9 is a schematic diagram illustrating a user domain isolation technique for user-specific file access control.

According to the user domain isolation technique for user-specific file access control, access control for a file system is basically performed on the basis of an application identifier (UID) in an existing mobile OS such as Android. In other words, even when an actual user of an application is different, the application operates with only one UID. Accordingly, when a malicious user uses the application, data of several users (login information, payment information, etc.) stored in an application directory may be easily misused. For this reason, in this research, an existing file access control mechanism is expanded to support user domain isolation. Since the existing mechanism is basically designed to operate over several layers, such as a kernel layer, an OS layer, an application layer, etc., it is necessary to minimize a correction range for easiness of technological application and backward compatibility. The present research proposes a UID multiplexing model for expanding the existing mechanism while making maximum use of the existing mechanism. According to this model, security authentication is performed for a user first, and user-specific individual UIDs and an application directory are allocated to one application as shown in FIG. 9. Each directory is accessible only by an application having the corresponding UID, and a UID of a target application may be changed to a UID for an actual user and operate during runtime. This model can isolate each user without significantly modifying the existing access control method which is performed on the basis of a UID.

According to the present invention, it is possible to provide a mobile OS security technology that allows a flexible multi-device use environment, such as a live streaming application, even between heterogeneous platforms by supporting distribution of UI units and ensures secure multi-surface sharing by considering and preventing security risk elements in a multi-device environment.

## Claims

1. A method implemented by a computer to distribute a user interface (Ul) to a second smart device (hereinafter, "guest device"), which uses a different platform (hereinafter, "guest platform") from a program (hereinafter, "host platform") serving as a platform of a first smart device (hereinafter, "host device"), through an operation of the host platform when a specific application of the host device is executed, the method comprising:
(a) receiving a selection of a UI to be transmitted to the guest device;
(b) rendering the selected UI; and
(c) transmitting pixel data of the rendered UI to the guest device.

2. The method of claim 1, further comprising, before the operation (b), (b01) receiving screen resolution information of the guest device from the guest device,
wherein the operation (b) comprises performing rendering according to the received resolution information.

3. The method of claim 2, further comprising, after the operation (c):
(d1) receiving data input through the UI by a user and corresponding UI information from the guest device;
(d2) finding a UI object according to the UI information and calling an input event handler of the UI object;
(d3) rendering a UI update frame for a UI update made upon the call according to the resolution information; and
(d4) transmitting the rendered UI update frame to the guest device.

4. The method of claim 3,
wherein the operation (d3) comprises, when a UI update animation is generated during the UI update, rendering each frame of the UI update animation according to the resolution information, and
wherein the operation (d4) comprises transmitting each frame of the rendered UI update animation to the guest device.

5. The method of claim 4, comprising, when each frame of the UI update animation is rendered and a currently rendered frame is similar to a previously transmitted frame, transmitting only a hash key value rather than frame data.

6. A method implemented by a computer to receive a user interface (Ul) from a first smart device (hereinafter, "host device") and execute the UI in a second smart device (hereinafter, "guest device") through an operation of a program (hereinafter, "guest platform") which serves as a platform of the guest device when a specific application of the host device is executed, the method comprising:
(a) receiving pixel data of a rendered UI from the host device; and
(b) rendering the received UI pixel data as an image,
wherein the guest platform is of a different type from a platform of the host device.

7. The method of claim 6, further comprising, before the operation (a), (a01) transmitting screen resolution information of the guest device to the host device,
wherein the UI pixel data received in the operation (a) is data rendered according to the resolution information.

8. The method of claim 7, further comprising, after the operation (b):
(c1) receiving a data input of a user through the UI which is distributed and received from the host device;
(c2) determining which UI object the input is for;
(c3) transmitting the user input data and information on the UI object to the host device;
(c4) receiving a UI update frame from the host device; and
(c5) rendering the received UI update frame as an image.

9. The method of claim 8, wherein the operation (c4) comprises, when the UI update frame is a frame of a UI update animation, rendering each frame of the UI update animation as an image.

10. The method of claim 9, comprising, when the frame of the UI update animation is received as a hash key value, loading and rendering a frame corresponding to the received hash key value among previously stored frames.

11. A first smart device (hereinafter, "host device") which performs a function of distributing a user interface (Ul) to a second smart device (hereinafter, "guest device") when a specific application is executed, the host device comprising:
at least one processor; and
at least one memory configured to store computer-executable instructions.
wherein the computer-executable instructions stored in the at least one memory involve the at least one processor:
(a) receiving a selection of a UI to be transmitted to the guest device;
(b) rendering the selected UI; and
(c) transmitting pixel data of the rendered UI to the guest device, and
wherein the host device uses a different type of platform from the guest device.

12. A second smart device (hereinafter, "guest device") which receives a user interface (Ul) from a first smart device (hereinafter, "host device") and executes the UI when a specific application of the host device is executed, the guest device comprising:
at least one processor; and
at least one memory configured to store computer-executable instructions,
wherein the computer-executable instructions stored in the at least one memory involve the at least one processor:
(a) receiving pixel data of a rendered UI from the host device; and
(b) rendering the received UI pixel data as an image, and
wherein the guest device uses a different type of platform from the host device.

13. A computer program (hereinafter, "host platform") stored in a non-transitory storage medium and running on a first smart device (hereinafter, "host device") to distribute a user interface (Ul) to a second smart device (hereinafter, "guest device") when a specific application of the host device is executed, wherein the computer program comprises instructions stored in the non-transitory storage medium and involving a processor:
(a) receiving a selection of a UI to be transmitted to the guest device;
(b) rendering the selected UI; and
(c) transmitting pixel data of the rendered UI to the guest device, and wherein the host platform is of a different type from a platform of the guest device.

14. A computer program (hereinafter, "guest platform") stored in a non-transitory storage medium and running on a second smart device (hereinafter, "guest device") to receive a user interface (Ul) from a first smart device (hereinafter, "host device") and execute the UI in the guest device when a specific application of the host device is executed, wherein the computer program comprises instructions stored in the non-transitory storage medium and involving a processor:
(a) receiving pixel data of a rendered UI from the host device; and
(b) rendering the received UI pixel data as an image, and
wherein the guest platform is of a different type from a platform of the host device.
